# EUROPÄISCHE PATENTANMELDUNG

(11) **EP 0 634 830 A1**
(43) Veröffentlichungstag der Anmeldung: **18.01.1995**
(21) Anmeldenummer: 93111382.3
(22) Anmeldetag: 15.07.1993
(51) Int. Cl.: H02K 26/00, H01F 7/14, F02M 3/06

(54) **Stellmotor mit begrenzter Winkelbewegung**

(71) Anmelder: SIEMENS AKTIENGESELLSCHAFT, D-80333 München (DE)
(72) Erfinder: Frinzel, Udo, Dipl.-Ing., D-8411 Grünthal (DE); Schreiber, Hans, D-8417 Lappersdorf (DE)

(57) **Zusammenfassung**

Ein zweipoliger Schrittmotor weist eine eine erste Wicklung (W3, W4) aufweisende Steuerphase und eine weitere Phase auf, die durch einen Dauermagneten gebildet wird. Aufgabe ist es, den Verstellbereich des Schrittmotors zu vergrößern. Dazu wird die Phase mit dem Dauermagneten mit einer zusätzlichen Wicklung (W5, W6) versehen, wobei die erste und die zweite Wicklung hintereinander geschaltet werden.

## Beschreibung

Die Erfindung betrifft einen Schrittmotor nach dem Oberbegriff von Patentanspruch 1
Schrittmotore werden in zunehmendem Maß als Stellglieder eingesetzt, insbesondere dort, wo eine elektronische Regelung erwünscht ist. So werden Schrittmotore u.a. zur Verstellung einer Drosselklappe von Kraftfahrzeugen eingesetzt, insbesondere zur Regelung der Leerlaufdrehzahl einer Brennkraftmaschine.

Im Normalbetrieb, insbesondere bei Drehzahlen oberhalb der Leerlaufdrehzahl, wird die Verstellung der Drosselklappe über einen Bowdenzug vorgenommen, der den Verstellweg eines Gaspedals auf eine Seilscheibe überträgt, die fest mit der Drosselklappe gekoppelt sein kann.

Zur Leerlaufregelung einer Brennkraftmaschine kann nun wie oben erwähnt ein Schrittmotor eingesetzt werden, um die Leerlaufregelung zu optimieren. Bei den dort üblicherweise eingesetzten zweipoligen Schrittmotoren beträgt die Verstellmöglichkeit der Drosselklappe 90° elektrisch, d.h. in diesem Fall nur 1,8° mechanisch. Aufgrund dieses kleinen Verstellwinkels besteht die Gefahr, daß die Brennkraftmaschine im Leerlauf stirbt. Um für einen Bereich, beispielsweise für 600 bis 1200 min⁻¹ eine ausreichende Leerlaufregelung zu erhalten, sollte dieser Bereich etwa einen Verstellbereich für den Schrittmotor von 0 bis 10° mechanisch aufweisen.

Es ist Aufgabe der vorliegenden Erfindung, den Verstellbereich von Schrittmotoren merklich zu vergrößern.

Diese Aufgabe wird gemäß der Erfindung durch den Patentanspruch 1 gelöst. Weiterbildungen sowie ein Verfahren zur Ansteuerung des Schrittmotors nach der Erfindung sind in den Unteransprüchen gekennzeichnet.

Aufgrund der Schaltung und dem Verfahren nach der Erfindung ist die durch den resultierenden Stromzeiger gebildete Ortskurve unsymmetrisch in Bezug auf die x-Achse. Je nach der Höhe der Windungszahl der weiteren Wicklung kann der Einfluß des Dauermagneten auf den resultierenden Stromvektor so gesteuert werden, daß sich ein vergrößerter Verstellwinkel für den Rotor des Schrittmotors ergibt. Dabei können optimale Verhältnisse dadurch erzielt werden, wenn die Gesamtwindungszahl der weiteren Wicklung etwa halb so groß ist wie die Gesamtwindungszahl der ersten Wicklung, da so der größtmögliche Verstellbereich erzielt werden kann.

Durch das in eine Richtung sperrende Halbleiterschaltungselement, das durch eine oder mehrere in Reihe geschaltete Dioden oder Z-Dioden gebildet sein kann, kann die den magnetischen Fluß durch den Dauermagneten verstärkende Stromvektorkomponente begrenzt werden, so daß es damit verhindert werden kann, daß der Schrittmotor in den Sättigungsbereich gelangt.

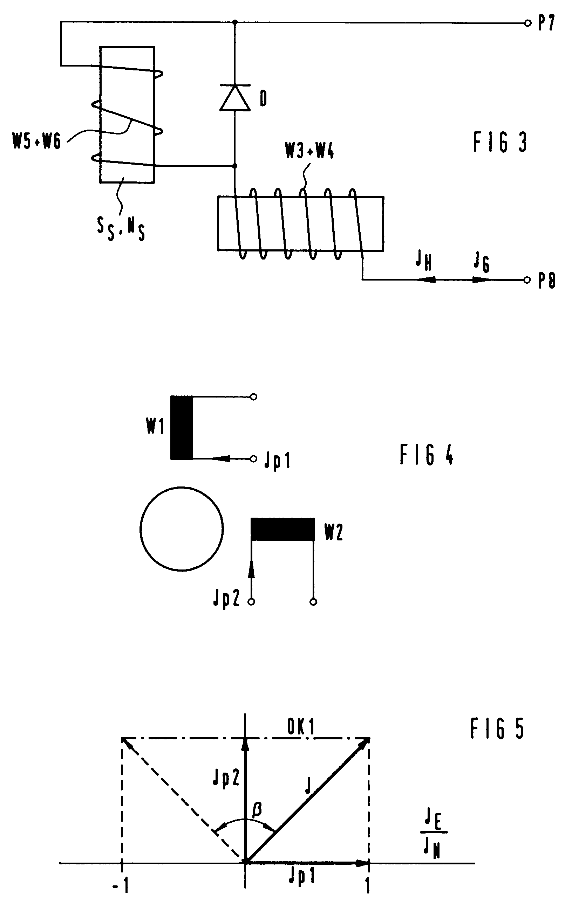

Anhand einer graphischen Darstellung von Fig. 4 und 5 soll nun eine bekannte Anordnung von Wicklungen von einem zweipoligen Schrittmotor erläutert werden.

Aufgrund der beiden Phasenströme Iₚ₁ und Iₚ₂ in den Wicklungen W1, W2, die einen resultierenden Feldvektor bilden, wird der Rotor des Schrittmotors in eine bestimmte Winkellage gebracht. Auf der x-Achse in Figur 5 ist das Verhältnis des Erregerstroms I_{E} zum Nennstrom I_{N} aufgetragen. Wie aus der Figur 5 hervorgeht, durchläuft durch Ändern des phasenstroms Iₚ₁ der resultierende Stromvektor I eine Ortskurve OK1 parallel zur x-Achse über einen Winkelbereich β von ± 45°, d.h. einen Bereich von 90° elektrisch, der im vorliegenden Fall einem Bereich von 1,8° mechanisch entspricht. Dieser Bereich reicht wie eingangs erwähnt für eine gute Leerlaufregelung nicht aus.

Die gleiche Ortskurve OK1 erhält man, wenn man die Wicklung W2, die vom Phasenstrom Iₚ₂ durchflossen wird, durch einen Dauermagneten ersetzt. Dies ist bekannt.

Die Erfindung sei nun anhand der Figuren 1 bis 3 näher erläutert, in denen
Figur 1 schematisch einen Aufbau eines Schrittmotors mit interner Beschaltung zeigt;
Figur 2 ein Vektordiagramm der Beschaltung von Figur 1 zeigt;
Figur 3 eine Darstellung der Gesamtwicklungen von Figur 1 zeigt, wobei parallel zu einer Gesamtwicklung eine Diode geschaltet ist;
Figur 4 schematisch einen bekannten zweiphasigen Schrittmotor zeigt; und
Figur 5 ein Vektordiagramm des bekannten Aufbaus von Figur 4 zeigt.

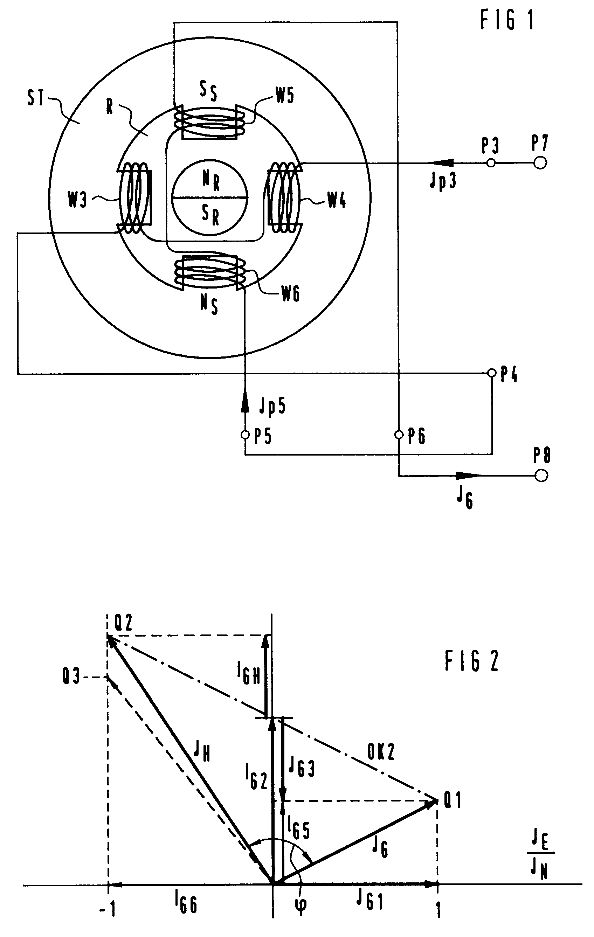

In Figur 1 ist nun schematisch eine Anordnung eines Schrittmotors gezeigt, bei der um einen Magnetpole N_{R} ,S_{R} aufweisenden Rotor R ein Stator ST vorgesehen ist, der aus Eisen besteht, wobei auf zwei gegenüberliegenden Polen je eine Wicklung W3 und W4 angeordnet ist. Senkrecht dazu sind Pole vorgesehen, die dauermagnetische Eigenschaften aufweisen und von den Wicklungen W5 und W6 umschlungen sind. Üblicherweise sind die Wicklungen W3 und W4 hintereinandergeschaltet und an Anschlußpunkte P3 und P4 herausgeführt. Ebenso sind üblicherweise die Wicklungen W5 und W6 hintereinandergeschaltet und an die Anschlußpunkte P5 und P6 herausgeführt. Die Wicklungen W3 und W4 werden von einem Phasenstrom Iₚ₃ und die Wicklungen W5 und W6 von einem Phasenstrom Iₚ₅ durchflossen. Dies gilt für den Fall von Figur 1, wenn die Anschlußpunkte des Schrittmotors P3, P4, P5 und P6 sind.

Gemäß der gestellten Aufgabe der Erfindung soll nun der Verstellbereich des Schrittmotors, d.h. sein Verstellwinkel vergrößert werden. Aus diesem Grund sind bei der Anordnung nach Figur 1 im Stator ST Magnetpole mit den Dauermagneten S_{S} und N_{S} vorgesehen, die von den Wicklungen W5 und W6 umschlungen sind.

Im Ausführungsbeispiel nach Figur 1 sei nun angenommen, daß die Wicklungen W5 und W6 jeweils die halbe Windungszahl aufweisen gegenüber den Wicklungen W3 und W4. Gemäß Figur 1 sind die Wicklungen W3, W4, W5 und W6 hintereinandergeschaltet und an die Anschlußpunkte P7 und P8 herausgeführt. Dadurch werden sie, wie in Figur 1 gezeigt, von einem gemeinsamen Steuerstrom I_{G} durchflossen.

Es sei nun angenommen, daß die Wirkung der Dauermagneten von den Magnetpolen S_{S} und N_{S} der Erregung mit Nennstrom entspricht, was dem Stromvektor I_{G2} in Figur 2 entspricht. Auf der x-Achse in Figur 2 ist das Verhältnis von I_{E}/I_{N} aufgetragen, ebenso auf der y-Achse.

Zur Bildung der Ortskurve OK2 sei nun angenommen, daß der Steuerstrom I_{G} mit seinem höchsten positiven Wert die Wicklungen durchströmt. Aufgrund der Anordnung der Wicklungen in Figur 1 setzt sich der Gesamtstrom I_{G} aus einer Stromvektorkomponente I_{G1} in positiver x-Achsenrichtung und einer senkrecht in y-Achsenrichtung dazu verlaufenden Stromvektorkomponente I_{G5} zusammen. Da eingangs angenommen wurde, daß die Windungszahl um die Magnetpole nur halb so groß sein soll wie die übrige Windungszahl, wird bei entsprechendem Wicklungssinn der Stromvektor I_{G2} um einen Stromvektor I_{G3} verringert, so daß sich ein resultierender Stromvektor auf der y-Achse von I_{G5} einstellt. Der resultierende Stromvektor I_{G5} und der Stromvektor I_{G1} bilden den Gesamtstrom I_{G}, so daß sich der Ortskurvenpunkt Q1 gewinnen läßt.

Wenn man nun annimmt, daß der Steuerstrom I_{G} umgekehrt wird, so setzt sich dieser aus dem negativen Stromvektor auf der x-Achse I_{G6} und aus den beiden Teilvektoren I_{G2} und I_{G4} auf der y-Achse zusammen, wobei der beiden Teilvektoren auf der y-Achse eine resultierenden Vektor in y-Richtung bilden. Aus Figur 2 erkennt man, daß der Teilvektor I_{G2} auf der y-Achse um den Teilvektor I_{G4} erhöht ist aufgrund des oben angenommenen Wicklungssinns. Der Stromvektor I_{G6} und der resultierende Vektor auf der y-Achse bilden dann einen Gesamtstrom I_{H} , durch den der Ortskurvenpunkt Q2 gewonnen wird. Die Ortskurve verläuft somit vom Ortskurvenpunkt Q1 zum Ortskurvenpunkt Q2.

Wenn man nun die Darstellung von Figur 5 mit der Darstellung nach Figur 2 vergleicht, so kann man erkennen, daß der Verstellwinkel bei der Darstellung nach Figur 2 größer geworden ist, d.h., daß der Winkel φ (Figur 2) größer als β ist, womit die gestellte Aufgabe gelöst wird.

Bei einer derartigen Vergrößerung des Verstellwinkels besteht jedoch die Gefahr, daß der Ortskurvenpunkt Q2 bereits im Sättigungsbereich sich befindet, was nun ab hier angenommen werden soll. Im Sättigungsbereich treten jedoch nichtlineare Verhältnisse der magnetischen Eigenschaften auf, so daß die Ortskurve dann nicht mehr linear wie in Figur 2 gezeigt verläuft. Die Erfindung sieht nun eine Maßnahme vor, um nicht in den Sättigungsbereich zu langen.

In Figur 3 ist nun eine Anordnung gezeigt, wobei gleiche Teile und Elemente, die den Figuren 1 und 2 entsprechen, mit den gleichen Bezugszeichen versehen sind. Parallel zu den Magnetpolen S_{S} und N_{S} ist allerdings zusätzlich eine Diode D geschaltet. Nimmt man nun eine Stromrichtung I_{G} an, so liegt die Diode in Sperrichtung, so daß sich gegenüber den Verhältnissen von Figur 1 nichts ändert, so daß der Ortskurvenpunkt Q1 sich einstellen kann. Kehrt man jedoch die Stromrichtung I_{G} um, d.h., daß sich ein Strom I_{H} in der in Figur 3 eingezeichneten Richtung einstellen soll, so liegt die Diode in Durchlaßrichtung für diesen Strom. Dadurch wird der in Figur 2 gezeigte Stromvektor I_{G4} aufgrund der Durchlaßspannung der Diode um die Durchlaßspannung verringert, so daß sich ein Ortskurvenpunkt Q3 in Figur 2 einstellt, der außerhalb des Sättigungsbereichs liegen soll. Je nach der Anzahl der hintereinandergeschalteten Dioden kann dieser Ortskurvenpunkt in seiner Lage verändert werden.

Anders ausgedrückt fließt durch die Wicklungen W5 und W6 ab Erreichen der Durchlaßspannung der Diode ein konstanter Strom, so daß der Stromvektor von I_{G4} nicht größer werden kann.

## Patentansprüche

1. Schrittmotor, insbesondere zweipoliger Schrittmotor mit einer eine erste Wicklung aufweisenden Steuerphase und zumindest einer weiteren in einem vorbestimmten Drehwinkel dazu angeodneten durch einen Dauermagneten permanentmagnetisch vorgespannten Phase,
**dadurch gekennzeichnet,** daß
eine weitere Wicklung (W5, W6) vorgesehen ist, die die permanentmagnetische Phase (S_{S}, N_{S}) umgibt,
und daß die erste (W3, W4) und die weitere Wicklung (W5, W6) einen gleichen/ungleichen Wickelsinn ausweisen und in Reihe hintereinander geschaltet sind.

2. Schrittmotor nach Anspruch 1, dadurch gekennzeichnet, daß die weitere Wicklung durch eine Zusatzwicklung gebildet wird.

3. Schrittmotor nach Anspruch 1, dadurch gekennzeichnet, daß der vorbestimmte Winkel etwa 90° beträgt.

4. Schrittmotor nach Anspruch 1, dadurch gekennzeichnet, daß die Windungszahl der ersten Wicklung etwa doppelt so groß ist wie die Windungszahl der weiteren Wicklung.

5. Schrittmotor nach Anspruch 1, dadurch gekennzeichnet, daß parallel zur weiteren Wicklung ein eine Stromrichtung sperrendes Halbleiterschaltungsbauelement angeordnet ist.

6. Schrittmotor nach Anspruch 5, dadurch gekennzeichnet, daß das Schaltungsbauelelement durch eine oder mehrere hintereinander geschaltete Dioden (D) gebildet ist.

7. Verfahren zur Ansteuerung eines Schrittmotors nach Anspruch 1, dadurch gekennzeichnet, daß die Wirkung des Dauermagneten durch den Strom in der einen Richtung in der weiteren Wicklung so geändert wird, daß der Verstellbereich des Schrittmotors auf der einen Seite seines Verstellbereichs so begrenzt wird, daß er bis kurz vor den Sättigungsbereich steuerbar ist, während bei entsprechender umgekehrter Stromrichtung in die andere Richtung die Wirkung des Dauermagneten reduziert wird.

8. Verfahren nach Anspruch 7, dadurch gekennzeichnet, daß der optimale Verstellbereich dadurch erziet wird, wenn die Windungszahl der ersten Wicklung (W3, W4) etwa doppelt so groß ist wie die Windungszahl der weiteren Wicklung (W5, W6).
